# EUROPEAN PATENT SPECIFICATION

(11) **EP 1 442 934 B1**
(45) Date of publication and mention of the grant of the patent: **22.03.2006**
(21) Application number: 04001817.8
(22) Date of filing: 28.01.2004
(51) Int. Cl.: B60R 1/12

(54) **Outside mirror for vehicle**
Aussenspiegel für Fahrzeuge
Rétroviseur extérieur pour véhicules

(30) Priority: 30.01.2003 JP 2003022336; 31.01.2003 JP 2003024887
(43) Date of publication of application: 04.08.2004
(73) Proprietor: ICHIKOH INDUSTRIES, LTD., Tokyo 144-0022 (JP)
(72) Inventor: Yagi, Hajime, Isehara-shi, Kanagawa-ken, 259-1192 (JP)
(74) Representative: Grünecker, Kinkeldey, Stockmair & Schwanhäusser Anwaltssozietät

(56) References cited:
- EP-A- 1 022 191
- EP-A- 1 362 741
- WO-A-02/102621
- US-A1- 2002 071 676
- US-A1- 2002 118 282
- US-A1- 2002 172 053
- PATENT ABSTRACTS OF JAPAN vol. 2003, no. 02, 5 February 2003 (2003-02-05) & JP 2002 308014 A (AUTO NETWORK GIJUTSU KENKYUSHO:KK;SUMITOMO WIRING SYST LTD; SUMITOMO E), 23 October 2002 (2002-10-23)
- PATENT ABSTRACTS OF JAPAN vol. 2000, no. 13, 5 February 2001 (2001-02-05) & JP 2000 272418 A (SONY CORP), 3 October 2000 (2000-10-03)

## Description

### BACKGROUND OF THE INVENTION

### 1) Field of the Invention

The present invention relates to a vehicle mirror unit according to the preamble of claim 1.

### 2) Description of the Related Art

Japanese Patent Application Laid Open No. 2000-062531 discloses a technology related to an outside mirror for a vehicle, which includes an image capturing unit. US Patent Application No. 2002/0118282 discloses a technology related to an outside mirror for a vehicle, which includes an image capturing unit and an infrared emitting unit. In both of the technologies, a video image captured by the image capturing unit allows a driver to visually recognize near a front wheel of a vehicle (axle shaft of the front wheel or around the ground where the front wheel makes a contact), and therefore, the blind spots near the front wheel can be seen clearly.

However, both of the technologies do not take how to provide a visible-light emitting unit into consideration at all. Therefore, if the visible-light emitting unit is provided without any consideration, visible light emitted from the visible-light emitting unit may directly enter into the image capturing unit. In this case, blooming or halation occurs in the video image captured by the image capturing unit, which causes visibility to be degraded. In order to solve deficiency in visibility, an additional component such as a filter is provided in the image capturing unit. However, this also causes degradation in performance such as minimum subject illumination or increase in component costs.

An outside mirror for a vehicle according to the preamble of claim 1 is known from US 2002/071676 A1. This prior art relates to a car-use rear view mirror structure in which a camera lens is disposed on a front side of the rear view mirror. This known mirror comprises a camera lens which is disposed on a second electric tilting mechanism. In addition, a bulb 31 is arranged beside the camera lens to provide auxiliary illumination for more clearly showing the view of the dead corner on the front side of the camera. The view of the dead corner on said front side of the car is then transmitted by the camera lens to a display arranged in the car so as to ensure driving safety.

From prior art WO 02/102621, a mirror is known for use in vehicles, in particular in articulated lorries or trucks. The sensing means disclosed in WO 02/102621 can be in the form of a camera or other image detector or sensor such as a photodetector. Further, this prior art discloses an indicator light. The purpose of said indicator light is to indicate when the mirror adjusting means and image sensing means are operating. Thus, the driver of a truck will know that the adjusting means and image sensing means are operating when a light, which can be located in the mirror housing, shines.

A mirror for use in vehicles comprising a bulb and a camera that are arranged such that the light emitted by the bulb does not directly enter into the camera is known from prior art US 2002/0172053 A1.

Further, document JP 2002 308014 discloses an image sensor which is constituted as a colour CCD equipped with a colour filter of e.g. red-green-blue. Further, in order to take account of the photosensitive property of the image sensor, a red light is used for the source of the illumination light. This prior art upholds the drawback that adding of further components, such as a filter, also causes degradation in performance, such as minimum subject illumination or increase in component costs.

### SUMMARY OF THE INVENTION

It is an object of the present invention to solve at least the problems in the conventional technology.

The object is solved by an outside mirror for a vehicle as defined in claim 1. Preferred embodiments of the inventive device are subject to the dependent claims.

The other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 is an external view of an outside mirror for a vehicle, according to a first embodiment of the present invention;
Fig. 2 is a schematic diagram for illustrating relative positional relation between an objective lens of an image capturing unit and a light source of a visible-light emitting unit, combining a partial cross section alone a IIA-IIA line with a partial cross section along a IIB-IIB line shown in Fig. 1;
Fig. 3 is a cross section along a III-III line shown in Fig. 1 for illustrating the relative positional relation between the objective lens and the light source;
Fig. 4 is an external view of an outside mirror for a vehicle, according to a second embodiment of the present invention;
Fig. 5 is a schematic diagram for illustrating relative positional relation between an objective lens of an image capturing unit and a light source of a visible-light emitting unit, combining a partial cross section along a VA-VA line with a partial cross section along a VB-VB line shown in Fig. 4;
Fig. 6 is a cross section along a VI-VI line shown in Fig. 4 for illustrating the relative positional relation between the objective lens and the light source;
Fig. 7 is a schematic diagram of a flexible substrate and LEDs for emitting infrared rays of the outside mirror according to the second embodiment, which includes an infrared emitting unit and the visible-light emitting unit;
Fig. 8 is a schematic diagram of the flexible substrate for illustrating LEDs for emitting visible light, viewed from the direction of arrow VIII shown in Fig. 7;
Fig. 9 is a schematic diagram of the flexible substrate for illustrating the LEDs for emitting visible light and the LEDs for emitting infrared rays, viewed from the direction of arrow IX shown in Fig. 8; and
Fig. 10 is a cross section of an outside mirror according to a modification of the second embodiment.

### DETAILED DESCRIPTION

Exemplary embodiments of an outside mirror for a vehicle, according to the present invention are explained in detail below with reference to the accompanying drawings.

In this specification, a left side of the vehicle (automobile) is defined as the left side when a driver looks ahead (an advance direction of the vehicle). A right side thereof is defined as the right side when the driver looks ahead. Furthermore, a front side of the body is defined as the front side when the driver looks ahead, while a rear side of the body is defined as the rear side when the driver looks ahead.

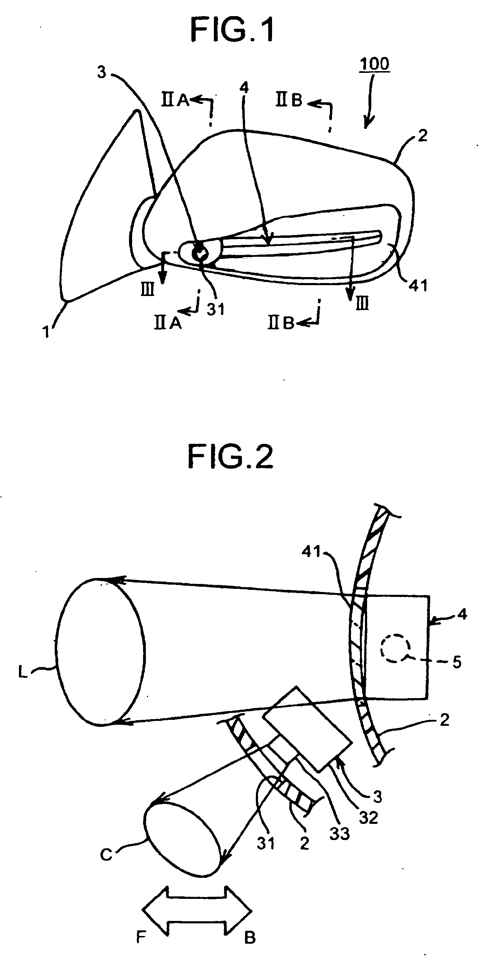

Fig. 1 to Fig. 3 are schematic diagrams of an outside mirror for a vehicle, according to a first embodiment of the present invention. An outside mirror 100 is a door mirror mounted on the left side of the vehicle and including a mirror base 1 and a mirror housing 2. The back of the mirror housing 2 is directed toward the front side F of the body.

Mounted on the lower part of the back of the mirror housing 2 are an image capturing unit 3 and a side-turn lamp 4 as an visible-light emitting unit. The side-turn lamp 4 emits yellow visible light. The relative positional relation between the image capturing unit 3 and the side-turn lamp 4 is such that the visible light emitted from the side-turn lamp 4 does not directly enter the image capturing unit 3.

In other words, as shown in Fig. 1 to Fig. 3, the image capturing unit 3 is mounted on the front side F of the body and on the side closer to the mirror base 1 (closer to the body) with respect to the side-turn lamp 4. On the other hand, the side-turn lamp 4 is mounted on the rear side B of the body and on the opposite side (outer side with respect to the body) to the side closer to the mirror base 1. The side-turn lamp 4 is provided along the longitudinal direction of the mirror housing 2 (direction from the mirror base 1 to the opposite side to the mirror base 1).

Provided on the back of the mirror housing 2 are an image capturing window 31 of the image capturing unit 3 and a lens 41 of the side-turn lamp 4. The image capturing window 31 is provided slightly downward. On the other hand, the lens 41 is provided in the substantially horizontal direction and is directed toward the front side F of the body. The lens 41 is made of a material having optical transparency that transmits visible light emitted from the side-turn lamp 4, and the side-turn lamp 4 is covered with the lens 41.

The image capturing unit 3 is, for example, a charge-coupled device (CCD) camera including a body 32 and an objective lens 33. The objective lens 33 faces the image capturing window 31. The image capturing unit 3 captures information within an image capturing range C in the front side F and the lower part of the body through the image capturing window 31. The image capturing range C includes the axle of the shaft of the left front wheel or around the ground plane thereof if the door mirror is mounted on the left side of the vehicle, and/or includes the axle of the shaft of the right front wheel or around the ground plane thereof if the door mirror is mounted on the right side of the vehicle.

The information captured by the image capturing unit 3 is displayed as image information on a display unit (e.g., a liquid crystal display) disposed near a driver's seat of the vehicle. Therefore, the problem of blind spots at the front wheel or around the ground plane thereof can be solved. The image capturing unit 3 may be mounted on the body so that it tilts to various angles with respect to the mirror housing 2. In this case, the image capturing unit 3 can be manually or remotely tilted, and therefore, the direction and the angle of capturing the image capturing range C can be controlled.

The side-turn lamp 4 includes at least one LED and a light source 5 such as an incandescent lamp. The light source 5 of the side-turn lamp 4 faces the lens 41 of the mirror housing 2. The side-turn lamp 4 has a visible-light distribution controller (not shown) that controls the distribution of light, that is, illuminates a light illumination range L in the front side F of the body with light (yellow visible light) from the light source 5 through the lens 41. Furthermore, the side-turn lamp 4 includes the light source 5, a holder for holding the light source 5, and the visible-light distribution controller, which are formed as a unit construction.

The side-turn lamp 4 illuminates the light illumination range L with light from the light source 5 through the lens 41 to perform a turn signal function. Using the side-turn lamp 4 allows lamps as follows to be omitted. The lamps include side-turn lamps (side turn signal lamps) or side marker lamps mounted on both sides of the fender of the vehicle, and/or turn lamps of front combination lamps mounted on both sides of the front of the vehicle.

The image capturing unit 3 captures information in the image capturing range C to display the information on the display unit, and it is thereby possible to solve the blind spot at the axle shaft of the front wheel or around the ground plane thereof. On the other hand, the side-turn lamp 4 blinkingly illuminates the light illumination range L, and it is thereby possible to perform the turn signal function.

In the above case, the relative positional relation between the image capturing unit 3 and the side-turn lamp 4 mounted on the mirror housing 2 is provided in such a manner that the light emitted from the side-turn lamp 4 does not directly enter the image capturing unit 3. In other words, the image capturing unit 3 is mounted on the front side F of the body with respect to the side-turn lamp 4, while the side-turn lamp 4 is mounted on the rear side B of the body with respect to the image capturing unit 3. The objective lens 33 of the image capturing unit 3 faces the image capturing window 31 that is provided slightly downward. On the other hand, the light source 5 of the side-turn lamp 4 faces the lens 41 that is provided in the substantially horizontal direction and is directed toward the front side F of the body.

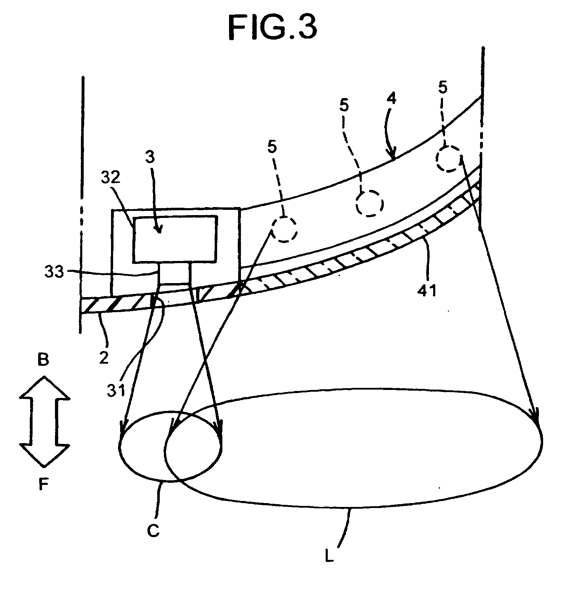

Consequently, the light emitted from the light source 5 is prevented from directly entering the objective lens 33. It is noted that even if the image capturing range C of the image capturing unit 3 and the light illumination range L of the side-turn lamp 4 are partially or entirely superposed on each other as shown in Fig. 3, the light emitted from the side-turn lamp 4 does not directly enter the image capturing unit 3.

Therefore, the outside mirror 100 according to the first embodiment has such a feature that blooming does not occur in a video image captured by the image capturing unit 3, and it is therefore possible to obtain clear visibility. Further, it is prevented to reduce performance such as minimum subject illumination by the additional components such as a filter and to increase component costs.

Furthermore, by providing the side-turn lamp 4 in the outside mirror 100 according to the first embodiment, the side-turn lamp, the side marker lamp, and the turn lamp of the front combination lamp can be omitted therefrom. Consequently, it is possible to prevent the light emitted from the lamp mounted on the vehicle from directly entering the image capturing unit 3.

The outside mirror 100 has the visible-light distribution controller in the side-turn lamp 4, and therefore, the distribution of the visible light from the light source 5 within a predetermined light illumination range L is controlled by a visible-light distribution controller. Furthermore, the outside mirror 100 has the side-turn lamp 4 that is formed as a unit construction, and therefore, the side-turn lamp 4 is shared by outside mirrors for various types of vehicles. In addition, in the outside mirror 100, the side-turn lamp 4 is covered with the lens 41, which makes it possible to protect the side-turn lamp 4 against cloud of dust or the like.

In the outside mirror 100, the image capturing unit 3 is manually or remotely tilted to adjust the image capturing range C. If the image capturing range C is adjusted, light emitted from the light source 5 of the side-turn lamp 4 requires control so as to prevent the light from directly entering the objective lens 33.

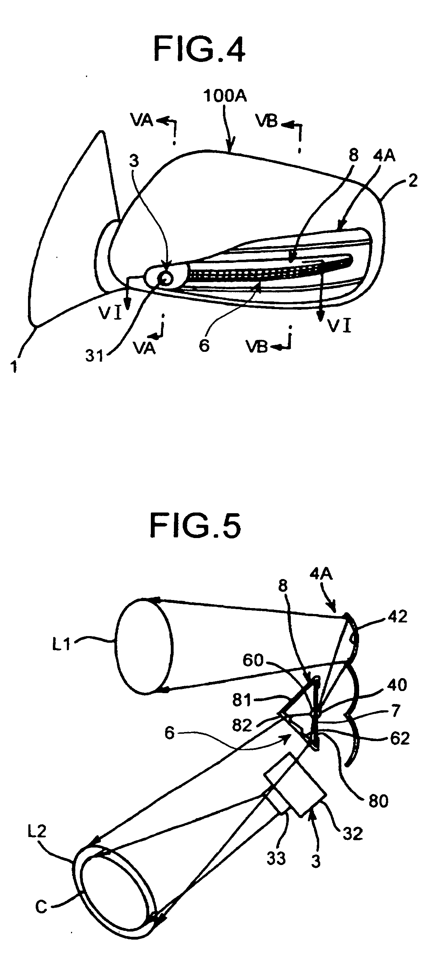

Fig. 4 to Fig. 9 are schematic diagrams of an outside mirror for a vehicle, according to a second embodiment of the present invention. An outside mirror 100A according to the second embodiment has the substantially same configuration as that of the outside mirror 100 according to the first embodiment. That is, as shown in Fig. 4, the outside mirror 100A is a door mirror mounted on the left side of the vehicle, and includes the mirror base 1 and the mirror housing 2. The back of the mirror housing 2 is directed toward the front side F of the body.

Mounted on the lower part of the back of the mirror housing 2 are an image capturing unit 3 the same as that according to the first embodiment, a side-turn lamp 4A as the visible-light emitting unit, and an infrared emitting unit 6. The image capturing unit 3 may be mounted so as to tilt in various angles with respect to the mirror housing 2. In this case, the image capturing unit 3 is manually or remotely tilted to control the direction and angle of capturing the image capturing range C. The side-turn lamp 4A and the infrared emitting unit 6 form a lighting system. The side-turn lamp 4A emits yellow visible light. The relative positional relation between the image capturing unit 3 and the side-turn lamp 4A of the lighting system is provided in such a manner that visible light emitted from the side-turn lamp 4A is prevented from entering the image capturing unit 3.

As shown in Fig. 4 to Fig. 6, the image capturing unit 3 is mounted on the front side F of the body and the side closer to the mirror base 1 (closer to the body) with respect to the side-turn lamp 4A of the lighting system. On the other hand, the side-turn lamp 4A is mounted on the rear side B of the body and the opposite side (outer side with respect to the body) to the side closer to the mirror base 1 with respect to the image capturing unit 3. Further, the side-turn lamp 4A and the infrared emitting unit 6 are provided along the longitudinal direction (the direction from the mirror base 1 to the opposite side thereto) of the mirror housing 2.

The infrared emitting unit 6 includes LEDs 60 that emit infrared rays as a light source. On the other hand, the side-turn lamp 4A includes LEDs 40 that emit visible light as a light source. The LEDs 40 are LEDs in a range of yellow or amber color with a wavelength characteristic of around 590 nanometers defined by regulations of the side-turn lamp. The LEDs 60 are LEDs that emit infrared rays with characteristics of a wavelength of around 950 nanometers.

The LEDs 60 are mounted over one surface of the substrate 7, and the LEDs 40 are mounted over the other surface of the substrate 7. In other words, the LEDs 40 and the LEDs 60 share the same substrate 7. The substrate 7 is a flexible substrate. The surface mounting of the LEDs 40 and LEDs 60 is realized by bonding chips of the LEDs on both surfaces of the flexible substrate 7, and covering the chips with lenses which are fixed to the surfaces of the flexible substrate 7. The flexible substrate 7 is held by a holder 8.

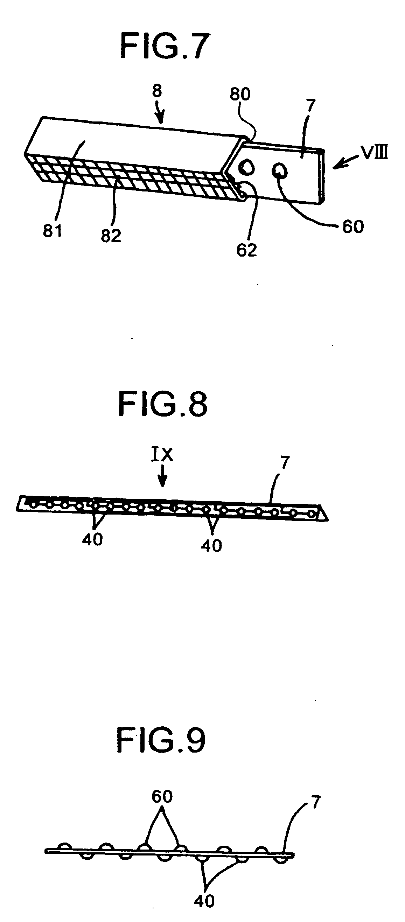

As shown in Fig. 5 and Fig. 7, the holder 8 is formed of synthetic resin or glass and has an angular shape formed with an upper surface 81 and a lower surface 82 with a side face 80 that are open. The edges of the opening on the side face of the holder 8 hold the flexible substrate 7. The flexible substrate 7 is mounted so that the LEDs 60 are directed toward inside of the holder 8. The holder 8 is disposed so that the top of the angular shape formed with the upper surface 81 and the lower surface 82 is directed toward the front side F of the body.

The side-turn lamp 4 includes a visible-light distribution controller 42. The visible-light distribution controller 42 is a reflector. The reflector 42 is mounted on the mirror housing 2 that is disposed on the rear side (rear side B of the body) farther than the LEDs 40, and faces the LEDs 40. The reflector 42 controls the distribution of light emitted from the LEDs 40 to reflect the light toward a visible-light distribution range L1 in the front side F of the body. The reflector 42 has a curved surface for direct control formed on the mirror housing 2, and has a reflecting surface formed by means of direct vapor deposition, plating, or highly reflective coating. However, the reflecting surface may be formed with a metal component to be disposed inside the side-turn lamp 4.

The side-turn lamp 4 makes visible light from the LEDs 40 reflected by the reflector 42 and controls the distribution of the visible light to illuminate the light illumination range L1 in the front side F of the body. As a result, the relative positional relation between the side-turn lamp 4 and the image capturing unit 3 is such that the light emitted from the side-turn lamp 4 does not directly enter the objective lens 33 of the image capturing unit 3. Further, the side-turn lamp 4 performs a turn signal function. Accordingly, side turn (marker) lamps mounted on both sides of the fender of the vehicle and turn lamps of front combination lamps mounted on the both sides of the front part of the vehicle can be omitted.

The infrared emitting unit 6 includes an infrared distribution controller 62. The infrared distribution controller 62 is a prism provided inside the lower surface 82 of the holder 8 in this example. The prism 62 controls the distribution of infrared rays emitted from the LEDs 60 so as to illuminate a range substantially the same as the image capturing range C (lower part of the front of the body) of the image capturing unit 3 or a range L2 wider than the image capturing range C. The upper surface 81 of the holder 8 may allow the infrared rays from the LEDs 60 to pass through as it is, or may cut it.

The infrared emitting unit 6 refracts the infrared rays from the LEDs 60 by the prism 62 and controls the distribution thereof to illuminate the range substantially the same as the image capturing range C or the range L2 wider than the image capturing range C. Even if the optical axis of the image capturing unit 3 is different from the optical axis of the LEDs 60, the infrared rays from the LEDs 60 can be distributed within the image capturing range C, i.e., the predetermined range L2.

The side-turn lamp 4 and the infrared emitting unit 6 constitute a lighting system, which is formed as a unit construction.

The outside mirror 100A according to the second embodiment is formed as explained above, and the effects thereof are explained below. The image capturing unit 3 is operated with a switch (not shown) in the vehicle to cause infrared rays to be emitted from the LEDs 60. In response to the emission, the infrared rays from the LEDs 60 pass through the prism 62 to be illuminated to the range substantially the same as the image capturing range C (lower part of the front of the body) or the range L2 wider than the image capturing range C. As a result, a video image of the lower part of the front side F of the body is displayed on an in-vehicle monitor or the like, which allows the blind spot at the axle of the front wheel of the vehicle or around the ground plane thereof to be solved. During daylight, the LEDs 60 may be controlled so as not to be emitted, through operation of the image capturing unit 3.

By blinkingly emitting the side-turn lamp 4 with a switch inside the vehicle, the visible light from the LEDs 40 is reflected by the reflector 42 to be illuminated blinkingly to the visible-light distribution range L1. The visible light from the LEDs 60 is amber color, and functions as the side-turn lamp 4.

As explained above, in the outside mirror 100A according to the second embodiment, the image capturing unit 3 captures the information in the image capturing range C and displays it on the display unit to solve the blind spot at the axle of the front wheel of the vehicle or around the ground plane thereof. On the other hand, the side-turn lamp 4A performs a turn signal function by blinkingly illuminating the light illumination range L1.

The relative positional relation in this case between the image capturing unit 3 and the side-turn lamp 4A mounted on the mirror housing 2 is such that the light emitted from the side-turn lamp 4A does not directly enter the image capturing unit 3. In other words, the image capturing unit 3 is mounted on the front side F of the body with respect to the side-turn lamp 4A while the side-turn lamp 4A is mounted on the rear side B of the body with respect to the image capturing unit 3. The objective lens 33 of the image capturing unit 3 is provided slightly downward, while the visible light emitted from the side-turn lamp 4A is directed toward the front side F of the body.

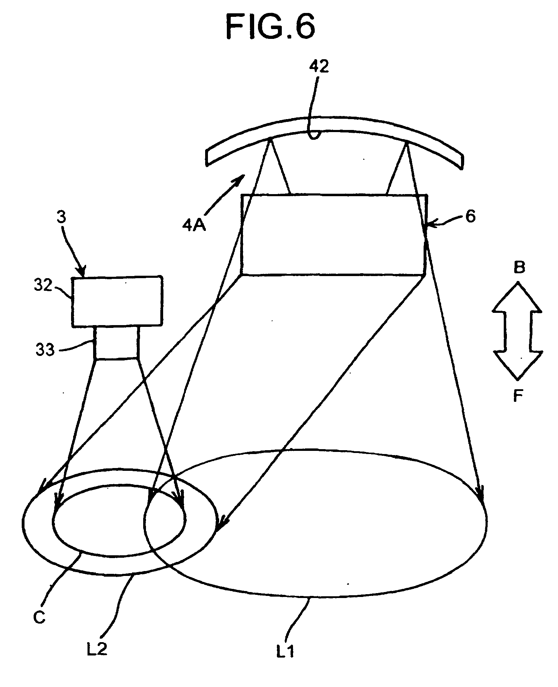

Consequently, the light emitted from the LEDs 40 of the side-turn lamp 4A is prevented from directly entering the objective lens 33 of the image capturing unit 3. As shown in Fig. 6, even if the image capturing range C of the image capturing unit 3 and the light illumination range L1 of the side-turn lamp 4A are partially or entirely superposed on each other, the light emitted from the side-turn lamp 4A is prevented from directly entering the image capturing unit 3.

Therefore, in the outside mirror 100A according to the second embodiment, blooming does not occur in a video image captured by the image capturing unit 3, which makes it possible to obtain a clear visibility. Furthermore, it is prevented to reduce performance such as minimum subject illumination by the additional components such as filter and to increase component costs. In addition, by providing the side-turn lamp 4A in the outside mirror 100A according to the second embodiment, the side-turn lamp, the side marker lamp, and the turn lamp of the front combination lamp can be omitted therefrom. Consequently, the outside mirror 100A according to the second embodiment prevents the light emitted from the lamp mounted on the vehicle from directly entering the image capturing unit 3.

The outside mirror 100A according to the second embodiment has the reflector 42 as the visible-light distribution controller in the side-turn lamp 4A. Therefore, the reflector 42 can control the distribution of the visible light emitted from the LEDs 40 within the predetermined light illumination range L1.

The outside mirror 100A according to the second embodiment includes the prism 62 as the infrared distribution controller in the infrared emitting unit 6. Therefore, the prism 42 can control the distribution of the infrared rays emitted from the LEDs 60 within the predetermined infrared distribution range L2. The infrared distribution range L2 is the range substantially the same as the image capturing range C of the image capturing unit 3 or wider than the image capturing range C. The prism 62 is not necessarily provided if there is a unit that illuminates the image capturing range C with infrared rays emitted from the LEDs 60.

The outside mirror 100A according to the second embodiment includes an infrared transmitting lens, i.e., the holder 8 through which infrared rays from the LEDs 60 pass. Therefore, the holder 8 is capable of protecting the LEDs 60 against cloud of dust or the like.

The outside mirror 100A according to the second embodiment has the lighting system including the side-turn lamp 4A and the infrared emitting unit 6, the lighting system being formed as a unit construction. Therefore, the lighting system can be shared with outside mirrors for various types of vehicles.

In the outside mirror 100A according to the second embodiment, the image capturing unit 3 can be manually or remotely tilted, and therefore, the image capturing range C can be adjusted. If the image capturing range C is adjusted, the visible light emitted from the LEDs 40 requires control so that it is prevented from directly entering the objective lens 33 of the image capturing unit 3.

In the outside mirror 100A according to the second embodiment, the light source of the infrared emitting unit 6 includes the LEDs 60, and the light source of the side-turn lamp 4A includes the LEDs 40. Therefore, the outside mirror 100A is downsized and reduces power consumption as compared with a system that uses an incandescent lamp or infrared lamp.

In the outside mirror 100A according to the second embodiment, the LEDs 40 and the LEDs 60 are mounted on both surfaces of the substrate 7, respectively. Therefore, it is possible to largely reduce a space for installation of the light sources.

In the outside mirror 100A according to the second embodiment, the substrate 7 with two light emitting units of the LEDs 40 and the LEDs 60, a harness, and the holder 8 can be shared. Therefore, it is possible to reduce the number of components accordingly, and also reduce costs.

In the outside mirror 100A according to the second embodiment, the LEDs 40 and the LEDs 60 are mounted on both surfaces of the substrate 7, respectively. Therefore, it is possible to largely reduce the height of the light sources for the visible-light emitting unit (LEDs 40) and infrared emitting unit (LEDs 60) as compared with a light emitting unit that mounts a lead wire of the LEDs on the substrate by dip soldering. Thus, it is possible to increase the degree of flexibility of layout for the outside mirror for vehicles.

In the outside mirror 100A according to the second embodiment, the substrate 7 with the LEDs 40 and LEDs 60 mounted thereon is a flexible substrate. Therefore, it is possible to provide layout of a light source that follows a designed curved surface of the mirror housing 2. Accordingly, the degree of design flexibility of layout for the light source is increased.

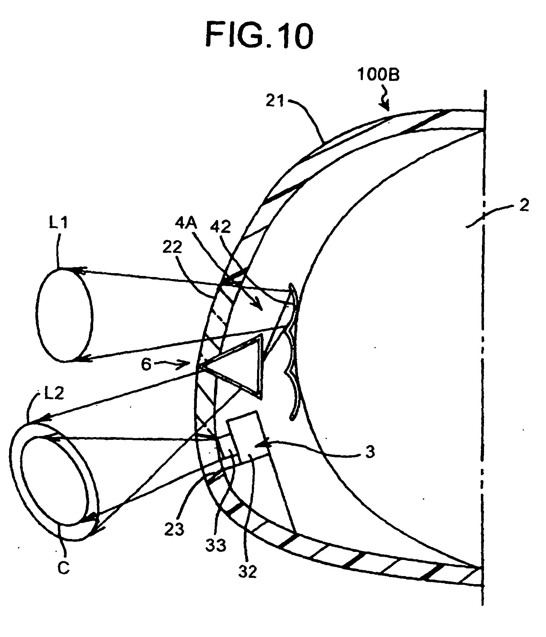

Fig. 10 is a cross section of an outside mirror according to a modification of the second embodiment. An outside mirror 100B has substantially the same configuration as the outside mirror 100 according to the first embodiment and the outside mirror 100A according to the second embodiment. As shown in Fig. 10, the image capturing unit 3, the side-turn lamp 4A, and the infrared emitting unit 6 are mounted in a designed cover (skull cap) 21.

In other words, the designed cover 21 covers the mirror housing 2, and the image capturing unit 3, side-turn lamp 4A, and the infrared emitting unit 6 are disposed between the mirror housing 2 and the designed cover 21. The designed cover 21 includes a lens 22 and an image capturing window 23. The lens 22 faces the reflector 42 of the side-turn lamp 4A, while the image capturing window 23 faces the objective lens 33 of the image capturing unit 3.

The outside mirror 100B according to the modification obtains substantially the same effects as that of the outside mirror 100 and the outside mirror 100A. Particularly, in the outside mirror 100B, as the side-turn lamp 4A is covered with the lens 22, it is possible to protect the side-turn lamp 4 against cloud of dust or the like.

It is noted that in the first and second embodiments, the image capturing unit 3 is positioned on the front side F of the body, while the side-turn lamp 4 or 4A is positioned on the rear side B of the body. Conversely, in the present invention, the image capturing unit 3 may be positioned on the rear side B of the body, while the side-turn lamp 4 or 4A may be positioned on the front side F of the body. In short, in the present invention, the relative positional relation between the image capturing unit 3 and the side-turn lamp 4 or the side-turn lamp 4A may be such that the light emitted from the side-turn lamp 4 or 4A is prevented from directly entering the objective lens 33 of the image capturing unit 3.

The side-turn lamps 4 and 4A as the visible-light emitting unit have been explained in the first and second embodiments. However, a lamp such as a pending lamp other than the side-turn lamp may be provided as the visible-light emitting unit. In the case of the pending lamp, an incandescent lamp may be used as a light source.

Furthermore, the door mirror has been explained in the first and second embodiments. However, another outside mirror for vehicles, for example, a fender mirror or a track mirror may be used in the present invention.

Moreover, in the second embodiment, the CCD camera as the image capturing unit 3 may be a special camera for infrared rays or a dual-purpose visible light and infrared camera.

## Claims

1. An outside mirror (100, 100A, 100B) for a vehicle, comprising:
an image capturing unit (3) provided in a mirror housing (2); and
an image capturing window (31) provided on a back of the mirror housing (2),
**characterized in that**
the outside mirror (100, 100A, 100B) further comprises:
a lamp (4, 4A) for emitting visible light as a turn signal or side marker, the lamp being provided in the mirror housing (2); and the outside mirror (100, 100A, 100B) further comprises one of
- a lens (41) for transmitting the visible light emitted from the lamp (4),
wherein the lens (41) is provided in the substantially horizontal direction for directing the visible light toward the front side of the vehicle,
wherein the image capturing window (31) is provided slightly downward or
- a visible light distribution controller (42) for reflecting the visible light emitted from the lamp (4A) and for directing the visible light toward the front side of the vehicle, wherein an objective lens (33) of the image capturing unit (3) is provided slightly downward, thus in both cases preventing the visible light emitted from the lamp (4, 4A) from directly entering into the image capturing unit (3).

2. The outside mirror (100A) comprising the visible light distribution controller (42) according to claim 1, further comprising:
an infrared emitting unit (6) for emitting infrared ray provided in the mirror housing (2), wherein the infrared emitting unit (6) distributes the infrared ray within a predetermined range.

3. The outside mirror (100, 100A, 100B) according to claim 1 or 2, wherein the lamp (4, 4A) includes the visible-light distribution controller (42) for controlling distribution of the visible light emitted within a predetermined range.

4. The outside mirror (100, 100A, 100B) according to claim 1 or 2, wherein the lamp (4, 4A) is produced as a unit construction.

5. The outside mirror (100, 100A, 100B) according to claim 1 or 2, wherein the image capturing unit (3) has a mechanism to be tilted by manual operation or by remote operation.

6. The outside mirror (100, 100A, 100B) according to claim 2, wherein the infrared emitting unit (6) includes an infrared ray distribution controller (62) for controlling distribution of the infrared ray emitted within a predetermined range; and
the lamp (4A) includes a visible-light distribution controller (42) for controlling distribution of the visible light emitted within a predetermined range.

7. The outside mirror (100A, 100B) according to claim 2, further comprising:
a lens (22) for transmitting the infrared ray emitted.

8. The outside mirror (100A, 100B) according to claim 2, wherein
the infrared emitting unit (6) includes an infrared source,
the infrared source includes at least one infrared light-emitting-diode (80) for emitting the infrared ray,
the lamp (4A) includes a visible-light source, and
the visible-light source includes at least one visible light-emitting-diode (40) for emitting the visible light.

9. The outside mirror (100A, 100B) according to claim 8, wherein
the infrared light-emitting-diode (60) is mounted on one surface of a substrate (7), and
the visible light-emitting-diode (40) is mounted on other surface of the substrate (7).

10. The outside mirror (100A, 100B) according to claim 9, wherein both the infrared light-emitting-diode (60) and the visible light-emitting-diode (40) are surface-mounted by bonding chips of said diodes (40, 60) on both surfaces of said substrate (7).

11. The outside mirror (100A, 100B) according to claim 9, wherein the substrate (7) is a flexible substrate.

12. The outside mirror (100) according to claim 1 or 2, wherein the image capturing unit (3) captures an image of an area illuminated by the visible-light emitted or of an area around a ground plane of the blind spot at the axle of a front wheel of the vehicle.

## Patentansprüche

1. Außenspiegel (100, 100A, 100B) für ein Fahrzeug, der umfasst:
eine Bilderfassungseinheit (3), die in einem Spiegelgehäuse (2) vorhanden ist; und
ein Bilderfassungsfenster (31), das an einer Rückseite des Spiegelgehäuses (2) vorhanden ist,
**dadurch gekennzeichnet, dass** der Außenspiegel (100, 100A, 100B) des Weiteren umfasst:
eine Leuchte (4, 4A), die sichtbares Licht als Fahrtrichtungssignal oder Seitenmarkierung emittiert, wobei die Leuchte in dem Spiegelgehäuse (2) vorhanden ist; und der Außenspiegel (100, 100A, 100B) des Weiteren umfasst:
- eine Linse (41), die das von der Leuchte (4) emittierte Licht durchlässt, wobei die Linse (41) in der im Wesentlichen horizontalen Richtung vorhanden ist, um das sichtbare Licht auf die Vorderseite des Fahrzeugs zu zu richten, und das Bilderfassungsfenster (31) leicht nach unten gerichtet ist, oder
- eine Verteilungssteuerung (42) für sichtbares Licht, die das von der Leuchte (4A) emittierte sichtbare Licht reflektiert und das sichtbare Licht auf die Vorderseite des Fahrzeugs zu richtet, wobei eine Objektivlinse (33) der Bilderfassungseinheit (3) leicht nach unten gerichtet ist,
wobei so in beiden Fällen verhindert wird, dass das von der Leuchte (4, 4A) emittierte sichtbare Licht direkt in die Bilderfassungseinheit (3) eintritt.

2. Außenspiegel (100A), der die Verteilungssteuerung (42) für sichtbares Licht umfasst, nach Anspruch 1, und der des Weiteren umfasst:
eine Infrarot-Emissionseinheit (6), die einen Infrarotstrahl emittiert und in dem Spiegelgehäuse (2) vorhanden ist, wobei die Infrarot-Emissionseinheit (6) den Infrarotstrahl innerhalb eines vorgegebenen Bereiches verteilt.

3. Außenspiegel (100, 100A, 100B) nach Anspruch 1 oder 2, wobei die Leuchte (4, 4A) die Verteilungssteuerung (42) für sichtbares Licht enthält, die die Verteilung des emittierten sichtbaren Lichts in einem vorgegebenen Bereich steuert.

4. Außenspiegel (100, 100A, 100B) nach Anspruch 1 oder 2, wobei die Leuchte (4, 4A) als Modulkonstruktion hergestellt wird.

5. Außenspiegel (100, 100A, 100B) nach Anspruch 1 oder 2, wobei die Bilderfassungseinheit (3) einen Mechanismus hat, der durch manuelle Bedienung oder durch Fernbedienung geschwenkt wird.

6. Außenspiegel (100, 100A, 100B) nach Anspruch 2, wobei die Infrarot-Emissionseinheit (6) eine Verteilungssteuerung (62) für den Infrarotstrahl enthält, die die Verteilung des emittierten lnfrarotstrahls innerhalb eines vorgegebenen Bereiches steuert; und
die Leuchte (4A) eine Verteilungssteuerung (42) für sichtbares Licht enthält, die Verteilung des emittierten sichtbaren Lichts innerhalb eines vorgegebenen Bereiches steuert.

7. Außenspiegel (100A, 100B) nach Anspruch 2, der des Weiteren umfasst:
eine Linse (22), die den emittierten Infrarotstrahl durchlässt.

8. Außenspiegel (100A, 100B) nach Anspruch 2, wobei die Infrarot-Emissionseinheit (6) eine Infrarotquelle enthält,
die Infrarotquelle wenigstens eine infrarotes Licht emittierende Diode (80) enthält, die den Infrarotstrahl emittiert,
die Leuchte (4A) eine Quelle sichtbaren Lichts enthält und
die Quelle sichtbaren Lichts wenigstens eine sichtbares Licht emittierende Diode (40) enthält, die das sichtbare Licht emittiert.

9. Außenspiegel (100A, 100B) nach Anspruch 8, wobei
die infrarotes Licht emittierende Diode (60) auf einer Fläche eines Substrats (7) montiert ist, und
die sichtbares Licht emittierende Diode (40) auf einer anderen Fläche des Substrats (7) montiert ist.

10. Außenspiegel (100A, 100B) nach Anspruch 9, wobei sowohl die infrarotes Licht emittierende Diode (60) als auch die sichtbares Licht emittierende Diode (40) oberflächenmontiert werden, indem Chips der Dioden (40, 60) auf beide Flächen des Substrats (7) gebondet werden.

11. Außenspiegel (100A, 100B) nach Anspruch 9, wobei das Substrat (7) ein flexibles Substrat ist.

12. Außenspiegel (100) nach Anspruch 1 oder 2, wobei die Bilderfassungseinheit (3) ein Bild eines Bereiches, der mit dem emittierten sichtbaren Licht beleuchtet wird, oder eines Bereiches um eine Bodenebene des toten Winkels an der Achse eines Vorderrades des Fahrzeuges erfasst.

## Revendications

1. Rétroviseur extérieur (100, 100A, 100B) pour véhicule comprenant : une unité de capture d'image (3) disposée dans un boîtier de rétroviseur (2) ; et une fenêtre de capture d'image (31) disposée à l'arrière du boîtier de rétroviseur (2),
**caractérisé en ce que**
le rétroviseur extérieur (100, 100A, 100B) comprend en outre :
une lampe (4, 4A) pour émettre une lumière visible sous la forme d'un signal de changement de direction ou d'un feu de position, la lampe étant disposée dans le boîtier de rétroviseur (2), et le rétroviseur extérieur (100, 100A, 100B) comprenant en outre l'un des éléments suivants :
- une lentille (41) pour transmettre la lumière visible émise par la lampe (4), la lentille (41) étant disposée dans la direction sensiblement horizontale pour diriger la lumière visible vers le côté avant du véhicule, et la fenêtre de capture d'image (31) étant disposée légèrement vers le bas, ou
- un dispositif de commande de distribution de lumière visible (42) pour réfléchir la lumière visible émise par la lampe (4A) et la diriger vers le côté avant du véhicule, une lentille d'objectif (33) de l'unité de capture d'image (3) étant disposée légèrement vers le bas,
pour ainsi, dans les deux cas, empêcher la lumière visible émise par la lampe (4, 4A) d'entrer directement dans l'unité de capture d'image (3).

2. Rétroviseur extérieur (100A) comprenant le dispositif de commande de distribution de lumière visible (42) selon la revendication 1, comprenant en outre :
une unité émettrice d'infrarouge (6) destinée à émettre un rayonnement infrarouge et disposée dans le boîtier de rétroviseur (2), l'unité émettrice d'infrarouge (6) distribuant le rayonnement infrarouge dans une plage prédéterminée.

3. Rétroviseur extérieur (100, 100A, 100B) selon la revendication 1 ou 2, dans lequel la lampe (4, 4A) comprend le dispositif de commande de distribution de lumière visible (42) destiné à commander une distribution de la lumière visible émise dans une plage prédéterminée.

4. Rétroviseur extérieur (100, 100A, 100B) selon la revendication 1 ou 2, dans lequel la lampe (4, 4A) est produite sous la forme d'une structure unitaire.

5. Rétroviseur extérieur (100, 100A, 100B) selon la revendication 1 ou 2, dans lequel l'unité de capture d'image (3) comporte un mécanisme permettant de l'incliner par une action manuelle ou à distance.

6. Rétroviseur extérieur (100, 100A, 100B) selon la revendication 2, dans lequel l'unité émettrice d'infrarouge (6) comprend un dispositif de commande de distribution de rayonnement infrarouge (62) pour commander une distribution du rayonnement infrarouge émis dans une plage prédéterminée ; et
la lampe (4A) comprend un dispositif de commande de distribution de lumière visible (42) pour commander une distribution de la lumière visible émise dans une plage prédéterminée.

7. Rétroviseur extérieur (100A, 100B) selon la revendication 2, comprenant en outre : une lentille (22) pour transmettre le rayonnement infrarouge émis.

8. Rétroviseur extérieur (100A, 100B) selon la revendication 2, dans lequel :
l'unité émettrice d'infrarouge (6) comprend une source infrarouge,
la source infrarouge comprend au moins une diode émettrice de lumière infrarouge (80) pour émettre le rayonnement infrarouge,
la lampe (4A) comprend une source de lumière visible, et
la source de lumière visible comprend au moins une diode émettrice de lumière visible (40) pour émettre la lumière visible.

9. Rétroviseur extérieur (100A, 100B) selon la revendication 8, dans lequel :
la diode émettrice de lumière infrarouge (60) est montée sur l'une des surfaces d'un substrat (7), et
la diode émettrice de lumière visible (40) est montée sur l'autre surface du substrat (7).

10. Rétroviseur extérieur (100A, 100B) selon la revendication 9, dans lequel la diode émettrice de lumière infrarouge (60) et la diode émettrice de lumière visible (40) sont toutes deux montées en surface par liaison de leurs puces (40, 60) sur les deux surfaces dudit substrat (7).

11. Rétroviseur extérieur (100A, 100B) selon la revendication 9, dans lequel le substrat (7) est un substrat flexible.

12. Rétroviseur extérieur (100) selon la revendication 1 ou 2, dans lequel l'unité de capture d'image (3) capte une image d'une zone éclairée par la lumière visible émise ou d'une zone autour d'un plan de projection au sol de l'angle mort au niveau de l'essieu de roue avant du véhicule.
